# EUROPEAN PATENT SPECIFICATION

(11) **EP 2 605 371 B1**
(45) Date of publication and mention of the grant of the patent: **13.08.2014**
(21) Application number: 11193245.5
(22) Date of filing: 13.12.2011
(51) Int. Cl.: H02K 1/27, H02K 7/18

(54) **Magnetic component part comprising different magnetic materials**
Magnetischer Komponententeil aus verschiedenen magnetischen Materialien
Pièce de composant magnétique comportant différents matériaux magnétiques

(43) Date of publication of application: 19.06.2013
(73) Proprietor: Siemens Aktiengesellschaft, 80333 München (DE)
(72) Inventor: Madsen, Anders Jakob, 7800 Skive (DK)

(56) References cited:
- WO-A1-2011/022453
- WO-A2-2008/116464
- JP-A- 2001 095 185

## Description

### Field of invention

The present invention relates to the technical field of electromechanical transducers having a rotor which comprises permanent magnets. In particular, the present invention relates to a magnetic component part for a rotor assembly of an electromechanical transducer. Further, the present invention relates to a rotor assembly, to an electromechanical transducer and to a wind turbine, which are all equipped with at least one of such magnetic component part.

### Art Background

Electromechanical transducers are machines, which convert electrical energy into mechanical energy or vice versa. An electric motor is a widely used electromechanical transducer that converts electrical energy into mechanical energy using magnetic field linkage. An electric generator is an electromechanical transducer that converts mechanical energy into electrical energy also using a magnetic field linkage.

An electromechanical transducer comprises a stator and a rotor. The stator is an assembly, which represents the stationary part of an electromechanical transducer. The rotor is an assembly, which represents the moving part of an electromechanical transducer. The above mentioned magnetic field linkage coupled the stator with the rotor.

In order to realize a magnetic field linkage permanent magnets may be used in particular for a rotor of an electromechanical transducer. In recent years, especially since the introduction of rare-earth magnetic materials, permanent magnet (PM) electromechanical transducers have become popular since they eliminate the need for commutators and brushes, which are commonly used with conventional Direct Current electromechanical transducer. The absence of an external electrical rotor excitation eliminates losses on the rotor and makes PM electromechanical transducers more efficient. Further, the brushless design of a PM electromechanical transducer allows conductor coils to be located exclusively in the stationary stator. In this respect it is mentioned that non-PM electromechanical transducers, which are equipped with commutators and brushes, are susceptible to significantly higher maintenance costs.

PM electromechanical transducers are also known for their durability, controllability, and absence of electrical sparking. Thanks to their advantages PM electromechanical transducers are widely used in many applications such as electric vehicles (i.e. the electromechanical transducer is a motor) or in power generation systems (i.e. the electromechanical transducer is a generator) such as for instance in wind turbines. PM electromechanical transducers are used in particular in so called Direct Drive (DD) wind turbines, wherein the generator is directly connected via a main shaft to (a hub of) a rotor of the respective DD wind turbine.

One known technical problem of PM electromechanical transducers is cogging torque. Cogging torque is produced between the rotor mounted permanent magnets and the stator coils due to a meeting of "sharp edges" of the rotor magnets and the stator coils when the PM electromechanical transducer is in operation. Cogging torque is an undesired effect that contributes to an output ripple (also called torque ripple), to vibrations, and/or to noise in an electromechanical transducer.
(A) It is known to reduce the effect of cogging torque by shaping the permanent magnets in such a manner that the magnets have rounded edges. This means that a PM slopes towards its edges.
(B) Further, due to constructional limitations of a PM electromechanical transducer having a rotor being rotatable around a central rotational axis not only the rotor itself but also the stator has a rounded shape. This holds at least for those parts of the stator, which parts face the rotor. This means that permanent magnets, which are mounted to the rotor and which apart from the above mentioned rounded edges have cuboid shapes, exhibit not a spatially constant air gap. In this respect the air gap is the distance between an upper surface of a PM and the outer surface of the stator segments, which outer surface faces the upper surface of the respective PM.

Due to the above mentioned requirements of both (A) the rounded edges of permanent magnets (in order to reduce cogging torque) and (B) the finite radius of the surfaces of the stator segments (due to constructional limitations) there is not only a desired minimum air gap between an upper surface of a PM and the surface of the stator segments but there are some parts of a PM which see a larger air gap than other parts of the PM. As a consequence, the efficiency of the magnetic field linkage between stator coils and the permanent magnets is reduced. Descriptive speaking, the performance of the magnetic material of the permanent magnets is reduced because the effective or average air gap is significantly larger than the minimum air gap. This has the effect that more magnetic material is necessary in order to obtain a sufficient high level of performance

WO 2008/116464 A2 discloses a wind turbine generator comprising stator coils with iron yoke material, stator isolators between the stator coils, rotor permanent magnets and magnet retainers for fastening said magnets to a rotor base. The magnets may be covered by a holding layer for fastening said magnets to the rotor base. Said holding layer can be of magnetic or non-magnetic material.

WO 2011/022453 A1 discloses a mechanism for attaching a permanent magnet at a rotor support structure. Thereby, two L-shaped side elements being welded to the rotor support structure are used for encompassing the permanent magnet.

There may be a need for improving the performance of the magnetic material being used in a PM electromechanical transducer without increasing the disadvantageous effects of cogging torque.

### Summary of the Invention

This need may be met by the invention as defined in the independent claim 1. Advantageous embodiments of the present invention are described by the dependent claims 2-10.

According to a first aspect of the invention there is provided a magnetic component part for a rotor assembly of an electromechanical transducer, the magnetic component part comprising (a) a base element having (i) a back surface for mounting the base element to a support structure of the rotor assembly and (ii) an opposing front surface, wherein at edge portions of front surface the front surface comprises a rounded shape, and (b) a cover element being connected to the base element and being formed on the edge portions. The base element comprises a first permanent magnetic material and the cover element comprises a second magnetic material being different from the first magnetic material.

The provided magnetic component part is based on the idea that by adding a magnetic material to the cover element an effective air gap between the base element of a rotor arrangement of an electromechanical transducer and a stator segment of a stator arrangement of the electromechanical transducer can be reduced. Thereby the inventor has realized that when using known magnetic component parts having rounded magnetic base elements for building up an electromechanical transducer the effective air gap is increased due to an increased distance between the stator segment and the rounded edge portions of a front surface of the magnetic base element compared to a minimum distance between the stator segment and a center portion of the front surface of the magnetic base element.

By (magnetically) reducing a maximum air gap between the stator segment and the rounded edge portions the effective or average air gap between the stator segment and the base element can be reduced. As a consequence, the efficiency or the performance of the (first) magnetic material being used for the base element can be increased. Because of the increased efficiency or performance the amount of first magnetic material being required for the base element can be reduced. This may significantly reduce the financial effort for building up a rotor assembly of a permanent magnet (PM) electromechanical transducer.

Specifically, the inventor has realized that when designing a PM electromechanical transducer, a very important design features that defines the performance of the PM electromechanical transducer is the effective or average air gap between the rotor mounted permanent magnets and the stator segments. If aiming at performance, a bigger air gap demands for more magnetic material in order to still obtain a high level of performance. Therefore, a reduction of the effective air gap will open the possibility to reduce the amount of (first) magnetic material which has to be used for the base element of the magnetic component part.

The mentioned reduction of the magnetic material costs may be in particular relevant for large PM electromechanical transducers which require a large amount of magnetic material. In this respect it is mentioned that in recent years the world market prices in particular for rear-earth magnetic material have dramatically been increased and further price increases can be expected.

Descriptive speaking, by rounding the edges of the front surface of the base element in particular for reducing cogging torque effects a volume reduction of the base element is accomplished in the region of the rounded edges. In accordance with the technical teaching described in this document this volume reduction of the first magnetic material is compensated at least partially with the second magnetic material, which is assigned to the cover element.

It is mentioned that because of a possible reduction of the effective air gap it may be possible to use an even more aggressive sloping of the magnets whereby a less amount of first magnetic material can be used without lowering the magnetic performance.

In this document the term "formed on" may mean that the cover element is arranged directly or alternatively indirectly at the base element. An indirect arrangement of the cover element at the base element may be realized for instance by an intermediate layer which is arranged between the front surface of the base element and the cover element. Such an intermediate layer may be for instance a protection layer which may be used for inhibiting an unwanted diffusion between the two different magnetic materials.

In accordance with the first aspect of the invention the cover element fills an edge volume, which is set free by the rounded shape of the front surface at the edge portions such that the shape of the magnetic component part is closer to a cuboid than the shape of the base element. This may provide the advantage that the described magnetic component part has a simple geometric shape which could be easily handled when assembling a plurality of magnetic component parts and a rotor support structure to a rotor assembly of a PM electromagnetic transducer.

According to an embodiment of the invention the first permanent magnetic material is a rear-earth material. This may provide the advantage that a magnetic field generated by the base element can be so strong that a highly efficient magnetic field linkage between a rotor arrangement being provided with the described magnetic component part and a stator arrangement can be increased such that a high performance PM electromechanical transducers can be build up.

According to a further embodiment of the invention the second magnetic material is an iron material. This may provide the advantage that the (second) magnetic material being used for the cover element can be a realized by using a low cost material.

According to a further embodiment of the invention the magnetic component part further comprises a protection layer covering at least the cover element. This may be in particular advantageous if a low cost iron material is used as the second magnetic material because iron is often very sensitive to environmental effects. Specifically, such a protection layer may be effective in avoiding an unwanted corrosion of the second magnetic material.

According to a further embodiment of the invention the magnetic component part further comprises a back plate which is mounted to the back surface of the base element. Such a back plate may facilitate a mounting of the magnetic component part to the support structure of the rotor assembly. Specifically, the back plate may be made from a material which is not sensitive to mechanical forces. At least the back plate may be less sensitive to mechanical forces such as e.g. pressures, deformations and so forth compared to a typically very brittle (first) magnetic material. Therefore, the back plate may be fastened to a support structure of the rotor assembly by any fastening means such as e.g. screws, clamps and so forth.

In this respect it is mentioned that when employing a back plate for fastening the magnetic component part to a support structure of the rotor assembly the base element may be not configured for directly mounting the base element to the support structure. In this case the base element may be configured for indirectly mounting the base element to the support structure via the described back plate.

According to a further embodiment of the invention the magnetic component further comprises a glue which is located at a boundary surface between the back surface of the base element and the back plate. This may mean that the fastening of the base element to the back plate is realized by gluing.

In view of a typical large brittleness of (first) magnetic materials attaching the base element to the back plate by means of gluing may be preferable in particular over other (mechanical) fastening mechanisms such as for instance screws and/or bolts. By using an appropriate glue material the risk for damaging the first magnetic material when attaching the same to the back plate may be kept very small.

According to a further aspect of the invention there is provided a rotor assembly for an electromechanical transducer. The provided rotor assembly comprises a support structure and at least one magnetic component part as described above, wherein the back surface of the at least one magnetic component part is mounted to the support structure.

The provided rotor assembly is based on the idea that with the above described magnetic component part a rotor assembly for an electromechanical transducer can be built up, which allows to design a PM electromechanical transducer having a smaller effective air gap than known PM electromechanical transducers wherein the shape of the permanent magnets has rounded edges for e.g. reducing disadvantageous cogging torque effects.

The mentioned support structure may be realized for instance by a so called rotor housing which, when being installed in a PM electromechanical transducer, is rotatable around a rotational axis of the PM electromechanical transducer.

According to a further aspect of the invention there is provided an electromechanical transducer comprising a stator assembly and a rotor assembly as described above.

The provided electromechanical transducer is based on the idea that with the above described rotor assembly comprising a magnetic component part comprising two different magnetic materials one can design a PM electromechanical transducer which on the one hand may take benefit from a reduced cogging torque and which on the other hand allows for minimizing the effective air gap. As has already been elucidated above in detail, a small effective air gap increases the magnetic coupling between rotor and stator and allows for realizing the rotor with a reduced amount of (first) magnetic material.

It is mentioned that the provided electromechanical transducer may be realized with different designs. A common design option is characterized by the matter of fact that the rotor assembly is located within the stator assembly. A less common design option is characterized by the matter of fact that the rotor assembly is located outside from the stator assembly. In the latter option during operation of the PM electromechanical transducer the magnetic flux interacting between the stator coils and the magnetic components parts may be directed radially outwards from the stator.

According to an embodiment of the invention the electromechanical transducer is a generator.

According to a further aspect of the invention there is provided a wind turbine for generating electrical power. The provided the wind turbine comprises (a) a tower, a rotor which is arranged at a top portion of the tower and which comprises at least one blade and (b) an electromechanical transducer as described above, wherein the electromechanical transducer is mechanically coupled with the rotor.

The provided wind turbine is based on the idea that the above described electromechanical transducer representing a generator for the wind turbine may allow for increasing the efficiency of an electricity generation without using an increased amount of (first) magnetic material.

It has to be noted that embodiments of the invention have been described with reference to different subject matters.

The invention will be described in more detail hereinafter with reference to examples of embodiment but to which the invention is not limited.

### Brief Description of the Drawing

- Figure 1: shows a wind turbine according to an embodiment of the present invention.
- Figure 2: shows an electromechanical transducer comprising a rotor assembly which is provided with a known magnetic component part.
- Figure 3: shows in accordance with an embodiment of the invention an electromechanical transducer comprising a rotor assembly which is provided with a magnetic component part comprising two different magnetic materials.

### Detailed Description

The illustration in the drawing is schematically. It is noted that in different figures, similar or identical elements are provided with the same reference signs or with reference signs, which are different from the corresponding reference signs only within the first digit.

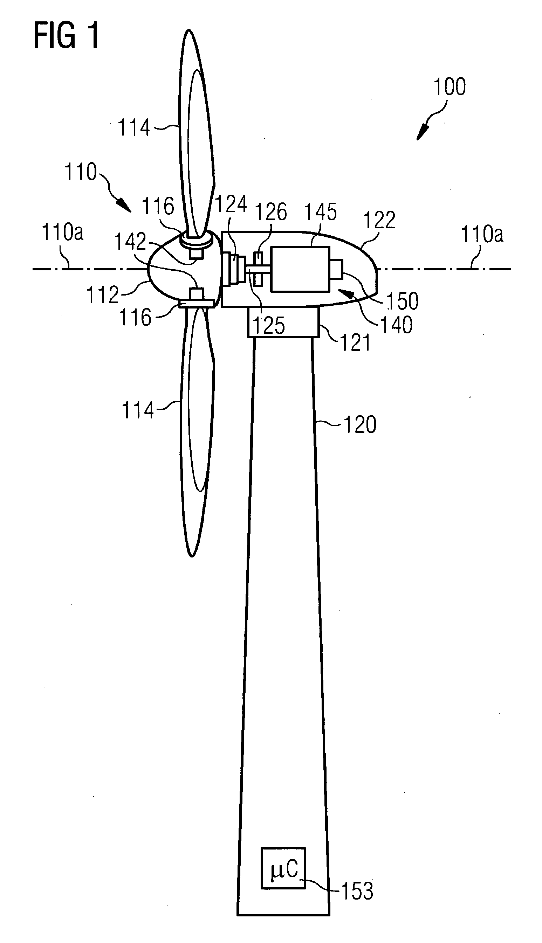

Figure 1 shows a wind turbine 100 according to an embodiment of the invention. The wind turbine 100 comprises a tower 120 which is mounted on a non-depicted fundament. On top of the tower 120 there is arranged a nacelle 122. In between the tower 120 and the nacelle 122 there is provided a yaw angle adjustment device 121 which is capable of rotating the nacelle 122 around a non depicted vertical axis being aligned with the longitudinal extension of the tower 120. By controlling the yaw angle adjustment device 121 in an appropriate manner it can be made sure that during a normal operation of the wind turbine 100 the nacelle 122 is always properly aligned with the current wind direction. However, the yaw angle adjustment device 121 can also be used to adjust the yaw angle to a position, wherein the nacelle 122 is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114 which are mounted at a hub 112 extend radially with respect to the rotational axis 110a.

In between the hub 112 and a blade 114 there is respectively provided a blade adjustment device 116 in order to adjust the blade pitch angle of each blade 114 by rotating the respective blade 114 around a non depicted axis being aligned substantially parallel with the longitudinal extension of the blade 114. By controlling the blade adjustment device 116 the blade pitch angle of the respective blade 114 can be adjusted in such a manner that at least when the wind is not so strong a maximum wind power can be retrieved from the available wind power. However, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to an electromechanical transducer 140. The electromechanical transducer is a generator 140.

At this point it is mentioned that the gear box 124 is optional and that the generator 140 may also be directly coupled to the rotor 110 by the shaft 125 without changing the numbers of revolutions. In this case the wind turbine is a so caller Direct Drive (DD) wind turbine.

Further, a brake 126 is provided in order to stop the operation of the wind turbine 100 or to reduce the rotational speed of the rotor 110 for instance (a) in case of an emergency, (b) in case of too strong wind conditions which might harm the wind turbine 100, and/or (c) in case of an intentional saving of the consumed fatigue life time and/or the fatigue life time consumption rate of at least one structural component of the wind turbine 100.

The wind turbine 100 further comprises a control system 153 for operating the wind turbine 100 in a highly efficient manner. Apart from controlling for instance the yaw angle adjustment device 121 the depicted control system 153 is also used for adjusting the blade pitch angle of the rotor blades 114 in an optimized manner.

In accordance with basic principles of electrical engineering the generator 140 comprises a stator assembly 145 and a rotor assembly 150. The stator assembly 145 comprises a plurality of coils for generating electrical current in response to a time alternating magnetic flux. The rotor assembly 250 comprises a plurality of magnetic component parts each comprising two different magnetic materials. The magnetic component parts are arranged in rows being aligned with a longitudinal axis of the rotor assembly 150.

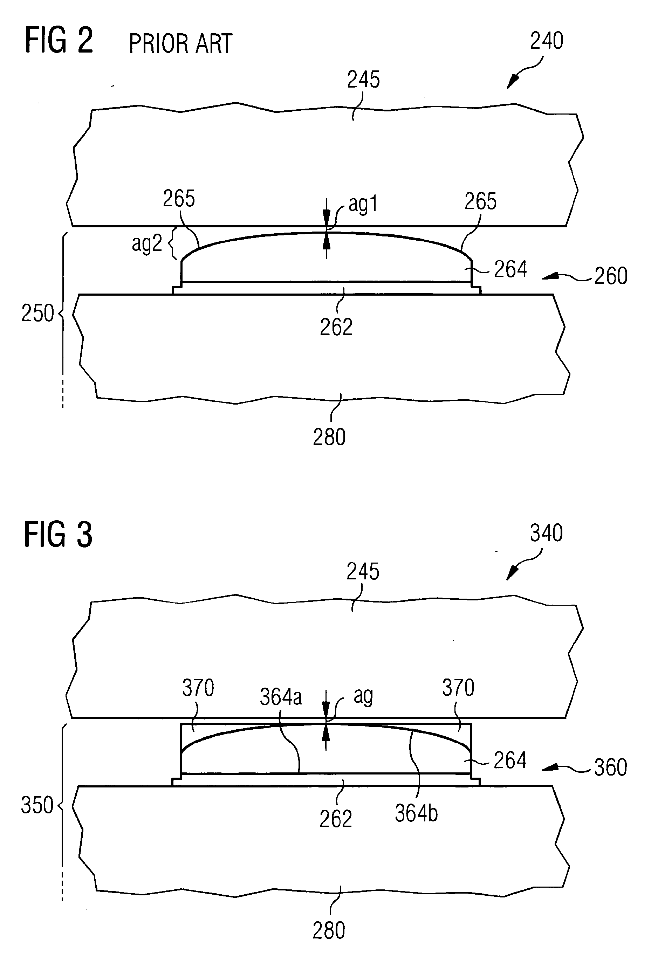

Figure 2 shows a known electromechanical transducer 240. The electromechanical transducer 240 comprises a stator assembly and a rotor assembly 250. The stator assembly 245 is equipped with a plurality of non depicted stator coils.

In case the electromechanical transducer 240 is a motor, the stator coils are excited with a stator current. As a consequence, a stator magnetic field is generated, which interacts with a rotor magnetic field being generated by magnetic component parts 260 which are mounted to a support structure 280 of the rotor assembly 250. In accordance with commonly known electrical principles this magnetic interaction causes the rotor assembly 250 to rotate with respect to the stator assembly 245.

In case the electromechanical transducer 240 is a generator, an electric voltage and/or current is induced within the stator coils in response to a spatially time dependent magnetic flux being generated by the magnetic component parts 260 which are mounted to the support structure 280 of the rotor assembly 250.

As can be seen from Figure 2, the known magnetic component parts 260 comprises a back plate 262 and a base element 264 which is made from a magnetic material. The base element 264 is mounted to the back plate 262. The back plate 262 is mounted to the support structure 280. The support structure 280 may also be denominated as a rotor housing.

As can be further seen from Figure 2, the base element 264 comprises rounded edge portions 265. These rounded edge portions 265 cause that the base element 264 has no sharp magnetic edges and, as a consequence, unwanted cogging torque effects are reduced. However, due to the rounded edge portions 265 there is no uniform air gap between the magnetic base element 264 and the stator assembly 245. As can be taken from Figure 2, in the center of the base element 264 there is a minimum air gap ag1 and at the rounded edge portions 265 there is maximum air gap ag2. This means that the effective air gap or the average air gap is much larger than the minimum air gap ag1 and, as a consequence, the magnetic coupling between stator assembly 245 and rotor assembly 250 is reduced.

Figure 3 shows in accordance with an embodiment of the invention an electromechanical transducer 340. The electromechanical transducer 340, which may be a generator of a wind turbine, comprises a rotor assembly 350 and a stator assembly 245. The rotor assembly 350 is provided with a plurality of magnetic component parts 360. For the sake of clarity only one of these magnetic component parts 360 is depicted in Figure 3.

As can be taken from a comparison between the known magnetic component part 260 illustrated in Figure 2 and the corresponding magnetic component part 360 illustrated in Figure 3, the magnetic component part 360 additionally comprises a cover element 370 which fills an edge volume which is set free by the rounded shape of a front surface 364b of the magnetic component part 360. This has the result that the magnetic component part 360 comprising both the base element 264 and the cover element 370 has a cuboid shape or is at least much closer to a cuboid than the shape of the base element 264 when taken alone.

According to the embodiment described here the base element 264 is made from a first magnetic material which is a rare-earth material and the cover element 370 comprises a second magnetic material. The second magnetic material is different from the first magnetic material. The second magnetic material may be a low cast magnetic material such as e.g. iron.

The provision of the second magnetic material has the technical effect that the effective air gap seen by the first magnetic material (at the edge regions) is reduced. As a consequence, an overall or effective air gap ag seen by the whole base element 264 is significantly smaller that the average air gap between the magnetic component part 260 and the stator assembly 245 in the known electromechanical transducer 240.

As can be seen from Figure 3, the base element 264 comprises a back surface 364a which is attached to the back plate 262. According to the embodiment described here the back plate 262 is made from iron and the back surface 364a is glued to the back plate 262.

It is mentioned that in Figure 3 the not depicted rotational axis of the rotor assembly 350 may be located (A) below the illustration of the stator assembly 245 or alternatively (B) above the illustration of the rotor assembly 350. In the first case (A) the electromechanical transducer 340 comprises an outer stator assembly 245 and an inner rotor assembly 350. In the second case (B) the electromechanical transducer 340 comprises an inner stator assembly 245 and an outer rotor assembly 350. In case (B) during operation of the electromechanical transducer 340 the magnetic component parts 260 of the outer rotor assembly 350 rotate around the inner stator assembly 245.

## Claims

1. A magnetic component part for a rotor assembly (350) of an electromechanical transducer (340), the magnetic component part (360) comprising
a base element (264) having
(i) a back surface (364a) for mounting the base element (264) to a support structure (280) of the rotor assembly (350) and
(ii) an opposing front surface (364b), wherein at edge portions of the front surface (364b) the front surface (364b) comprises a rounded shape, and
a cover element (370),
wherein the base element (264) comprises a first permanent magnetic material and the cover element (370) comprises a second magnetic material being different from the first permanent magnetic material,
**characterized in that**
the cover element (370) is connected to the base element (264) and is formed on the edge portions, and
the cover element (370) fills an edge volume, which is set free by the rounded shape of the front surface (364b) at the edge portions such that the shape of the magnetic component part (360) is closer to a cuboid than the shape of the base element (264).

2. The magnetic component part as set forth in the preceding claim, wherein
the first permanent magnetic material is a rear-earth material.

3. The magnetic component part as set forth in any one of the preceding claims, wherein
the second magnetic material is an iron material.

4. The magnetic component part as set forth in any one of the preceding claims, further comprising
a protection layer covering at least the cover element (370).

5. The magnetic component part as set forth in any one of the preceding claims, further comprising
a back plate (262) which is mounted to the back surface (364a) of the base element (262).

6. The magnetic component part as set forth in the preceding claim, further comprising
a glue which is located at a boundary surface between the back surface (364a) of the base element (264) and the back plate (262).

7. A rotor assembly for an electromechanical transducer (340), the rotor assembly (350) comprising
a support structure (280) and
at least one magnetic component part (350) as set forth in any one of the preceding claims, wherein the back surface (364a) of the at least one magnetic component part (360) is mounted to the support structure (280).

8. An electromechanical transducer comprising
a stator assembly (245), and
a rotor assembly (350) as set forth in the preceding claim.

9. The electromechanical transducer as set forth in the preceding claim, wherein
the electromechanical transducer (340) is a generator.

10. A wind turbine for generating electrical power, the wind turbine (100) comprising
a tower (120),
a rotor (110), which is arranged at a top portion of the tower (120) and which comprises at least one blade (114), and
an electromechanical transducer (140, 340) as set forth in the preceding claim, wherein the electromechanical transducer (140, 340) is mechanically coupled with the rotor (110).

## Patentansprüche

1. Magnetisches Bauteil für eine Rotoranordnung (350) eines elektromechanischen Wandlers (340), wobei das magnetische Bauteil (360) umfasst:
ein Basiselement (264) mit
(i) einer Rückseite (364a) zur Anbringung des Basiselements (264) an einer Stützkonstruktion (280) der Rotoranordnung (350) und
(ii) eine gegenüberliegende Vorderseite (364b), wobei die Vorderseite (364b) an Randabschnitten der Vorderseite (364b) eine gerundete Form aufweist, und
ein Abdeckelement (370), wobei das Basiselement (264) ein erstes permanentmagnetisches Material umfasst und das Abdeckelement (370) ein zweites magnetisches Material, das von dem ersten permanentmagnetischen Material verschieden ist, umfasst, **dadurch gekennzeichnet, dass** das Abdeckelement (370) mit dem Basiselement (264) verbunden ist und an den Randabschnitten geformt ist und das Abdeckelement (370) ein Randvolumen füllt, welches durch die gerundete Form der Vorderseite (364b) an den Randabschnitten freigelassen wird, sodass die Form des magnetischen Bauteils (360) einem Quader näherkommt als die Form des Basiselements (264).

2. Magnetisches Bauteil nach dem vorhergehenden Anspruch, wobei
das erste permanentmagnetische Material ein Seltenerdmaterial ist.

3. Magnetisches Bauteil nach einem der vorhergehenden Ansprüche, wobei
das zweite magnetische Material ein Eisenmaterial ist.

4. Magnetisches Bauteil nach einem der vorhergehenden Ansprüche, welches ferner umfasst:
eine Schutzschicht, die mindestens das Abdeckelement (370) bedeckt.

5. Magnetisches Bauteil nach einem der vorhergehenden Ansprüche, welches ferner umfasst:
eine Rückplatte (262), welche an der Rückseite (364a) des Basiselements (262) angebracht ist.

6. Magnetisches Bauteil nach dem vorhergehenden Anspruch, welches ferner umfasst:
einen Klebstoff, welcher sich an einer Grenzfläche zwischen der Rückseite (364a) des Basiselements (264) und der Rückplatte (262) befindet.

7. Rotoranordnung für einen elektromechanischen Wandler (340), wobei die Rotoranordnung (350) umfasst:
eine Stützkonstruktion (280) und
mindestens ein magnetisches Bauteil (350) nach einem der vorhergehenden Ansprüche, wobei die Rückseite (364a) des mindestens einen magnetischen Bauteils (360) an der Stützkonstruktion (280) angebracht ist.

8. Elektromechanischer Wandler, welcher umfasst:
eine Statoranordnung (245) und
eine Rotoranordnung (350) nach dem vorhergehenden Anspruch.

9. Elektromechanischer Wandler nach dem vorhergehenden Anspruch, wobei
der elektromechanische Wandler (340) ein Generator ist.

10. Windenergieanlage zur Erzeugung elektrischer Energie, wobei die Windenergieanlage (100) umfasst:
einen Turm (120),
einen Rotor (110), welcher an einem oberen Abschnitt des Turms (120) angeordnet ist und welcher mindestens ein Rotorblatt (114) umfasst, und
einen elektromechanischen Wandler (140, 340) nach dem vorhergehenden Anspruch, wobei der elektromechanische Wandler (140, 340) mit dem Rotor (110) mechanisch gekoppelt ist.

## Revendications

1. Pièce de composant magnétique pour un ensemble (350) de rotor d'un transducteur (340) électromécanique, la pièce (360) de composant magnétique comprenant
un élément (264) de base ayant
(i) une surface (364a) arrière pour monter l'élément (264) de base sur une structure (280) support de l'ensemble (350) de rotor et
(ii) une surface (364b) avant opposée, dans laquelle, au niveau de parties de bord de la surface (364b) avant, la surface (364b) avant comprend une forme arrondie, et
un élément (370) de capot,
dans laquelle l'élément (264) de base comprend un premier matériau magnétique permanent et l'élément (370) de capot comprend un deuxième matériau magnétique étant différent du premier matériau magnétique permanent,
**caractérisée en ce que**
l'élément (370) de capot est connecté à l'élément (264) de base et est formé sur les parties de bord, et
l'élément (370) de capot remplit un volume de bord, qui est libéré par la forme arrondie de la surface (364b) avant au niveau des parties de bord, de telle sorte que la forme de la pièce (360) de composant magnétique est plus proche d'un cuboïde que la forme de l'élément (264) de base.

2. Pièce de composant magnétique selon la revendication précédente, dans laquelle
le premier matériau magnétique permanent est un matériau des terres rares.

3. Pièce de composant magnétique selon l'une quelconque des revendications précédentes, dans laquelle
le deuxième matériau magnétique est un matériau de fer.

4. Pièce de composant magnétique selon l'une quelconque des revendications précédentes, comprenant en outre
une couche de protection recouvrant au moins l'élément (370) de capot.

5. Pièce de composant magnétique selon l'une quelconque des revendications précédentes, comprenant en outre
une plaque (262) arrière qui est montée sur la surface (364a) arrière de l'élément (264) de base.

6. Pièce de composant magnétique selon la revendication précédente, comprenant en outre
une colle qui est située au niveau d'une surface de séparation entre la surface (364a) arrière de l'élément (264) de base et la plaque (262) arrière.

7. Ensemble de rotor pour un transducteur (340) électromécanique, l'ensemble (350) de rotor comprenant
une structure (280) support et
au moins une pièce (360) de composant magnétique selon l'une quelconque des revendications précédentes, dans lequel la surface (364a) arrière de l'au moins une pièce (360) de composant magnétique est montée sur la structure (280) support.

8. Transducteur électromécanique comprenant
un ensemble (245) de stator, et
un ensemble (350) de rotor selon la revendication précédente.

9. Transducteur électromécanique selon la revendication précédente, dans lequel
le transducteur (340) électromécanique est un générateur.

10. Éolienne pour générer une énergie électrique, l'éolienne (100) comprenant
une tour (120),
un rotor (110), qui est agencé au niveau d'une partie supérieure de la tour (120) et qui comprend au moins une pale (114), et
un transducteur (140, 340) électromécanique selon la revendication précédente, dans laquelle le transducteur (140, 340) électromécanique est mécaniquement couplé avec le rotor (110).
